# EUROPEAN PATENT APPLICATION

(11) **EP 0 731 193 A1**
(43) Date of publication of application: **11.09.1996**
(21) Application number: 96650006.8
(22) Date of filing: 04.03.1996
(51) Int. Cl.: D01D 5/18, A23G 3/10

(54) **Continuous floss production apparatus and method**

(30) Priority: 06.03.1995 US 398882
(71) Applicant: FUISZ TECHNOLOGIES LTD., Chantilly, VA 22021 (US)
(72) Inventor: Battist, Gerald E., Reston, Virginia 22094 (US)
(74) Representative: McCarthy, Denis Alexis

(57) **Abstract**

An apparatus (10) and method for continuous processing and production of floss products that permits positive collection and takeup of the floss products for further processing. The apparatus (10) includes one or more rotating porous collection drums (12) provided with suction plenums (14) to assist floss product in adhering to outer surfaces of the drums (12). Continuous cleaning of the drums (12) is provided by positive pressure nozzles, which also aid in separating product from the drums (12). The drums (12) are used to collect and transport the product to a chopper (42) such as a hammer mill, by advancing the product along the continuous outer surfaces of the drums.

## Description

The present invention relates generally to production and processing of floss-like materials, and, more particularly, to production apparatus and method for continuously collecting such materials.

Various machines are known for producing floss-like materials. One example of a machine for producing floss is the cotton candy spinning machine, in which sucrose is transformed from a granulated material into a spun candy floss product. More recently, a variety of new apparatus and methods have been discovered which can be used to produce an array of products based on transformation of feedstock material to a floss. See, e.g., U.S. Patent No. 5,346,377 issued September 13, 1994, U.S. Patent No. 5,380,473 issued January 10, 1995, U.S. Application Serial No. 08/192,133 filed February 4, 1994, U.S. Application Serial No. 08/049,773 filed April 19, 1993, U.S. Application Serial No. 08/039,973 filed March 30, 1993, and U.S. Application Serial No. 08/266,234 filed June 27, 1994.

Heretofore, the majority of spinning machines have been adapted for batch processes. Spun product is ejected from the spinning machine and caught in a bowl or basin from which it must be periodically removed. It is believed that the efficiency of production processes could be improved by incorporating floss-producing machines, such as spinning machines, into a continuous production process. Several prior art devices have attempted to incorporate candy floss spinning machines into continuous production processes.

U.S. Patent No. 3,221,675 to Forkner discloses a spinning machine discharging floss into a rotating bowl from which the floss is gravity fed onto a conveyor belt. The gravity feed mechanism is specially adapted for commingling the floss with atomized materials. U.S. Patent No. 4,526,525 to Oiso et al. discloses a spinning machine discharging floss directly onto a conveyor belt with the aid of suction applied to the conveyor belt. The floss is discharged for further processing by an intricate series of conveyor belts and rollers.

The prior art devices suffer from a number of disadvantages, such as expense, intricacy of required parts, susceptibility to clogging, lack of positive means to remove spun floss product from the spinner head region (with concomitant potential for buildup of product), and so on. There is, therefore, a need in the prior art for a continuous floss production apparatus and method which provides for simple, positive takeup of spun floss product for further processing, with continuous or easy cleaning of key parts of the apparatus.

### SUMMARY OF THE INVENTION

The present invention, which addresses the needs of the prior art, provides a continuous floss production apparatus and method. The apparatus includes a floss producing apparatus, e.g., a spinner head, and a first porous collection drum rotably mounted opposite the floss spinner head. The drum collects spun floss product emanating from the spinner head on its continuous outer surface. The apparatus also includes a suction plenum located inside the collection drum, adjacent to the drum's outer surface. Suction applied to the plenum causes the floss product to adhere to the drum surface for positive takeup of the product by the drum from the spinner head.

In a preferred embodiment, two porous drums are provided. The drums counter-rotate so as to urge the floss product between the drums. The drums are preferably provided with internally-located positive pressure nozzles to assist in removing the floss product from the drums after the product has been urged between them. The positive pressure also aids in cleaning the porous drums, thus reducing clogging. Furthermore, in the preferred embodiment, a chopper such as a hammer mill or blade-type chopper is located downstream of and adjacent to the drums for size reduction of the floss, and a pair of feed rollers are located intermediate the drums and chopper to assist in floss transport. Optionally, doctor knives are provided to assist in removal of the floss from the drums, and a conveyor device is located downstream of the chopper to transport processed product to a holding region for packing or further processing.

The method of the present invention includes collecting floss product on an outer surface of a collection drum, advancing the floss product from the drum for further processing, and chopping the floss product. Preferably, the drum used in the collecting step is porous, with a vacuum applied to the drum to aid in collection of the floss product; the advancing step is carried out by rotating the drum; and the floss is separated from the drum before chopping. Generally, the floss can be easily and cleanly removed from the drum by pulling the matted floss from the drum. However, where assistance is required a positive pressure and/or a doctor knife can be used to aid in removal of the floss from the drum.

As a result, the present invention provides a continuous floss production apparatus and method offering greater production efficiency than prior batch processes. The apparatus is relatively inexpensive, requires no intricate parts, and is provided with a simple, reliable takeup of floss product for further processing. The ease of cleaning and simplicity of this equipment is especially important where floss is produced for the manufacture of pharmaceutical products.

The invention further provides a continuous floss production apparatus and method which allows production of substantially uniform length fibers from floss products. The invention still further provides a continuous floss production apparatus and method wherein a positive pressure nozzle is employed to aid in separation of floss product from a porous collection drum of the apparatus and to continuously clean the drum. Clogging is thereby minimized.

### BRIEF DESCRIPTION OF THE DRAWINGS

Figure 1 is a perspective view of a continuous floss production apparatus in accordance with the present invention; and
Figure 2 is a semi-schematic, transverse sectional view of a continuous floss production apparatus according to an alternative embodiment of the present invention.

### DETAILED DESCRIPTION OF THE INVENTION

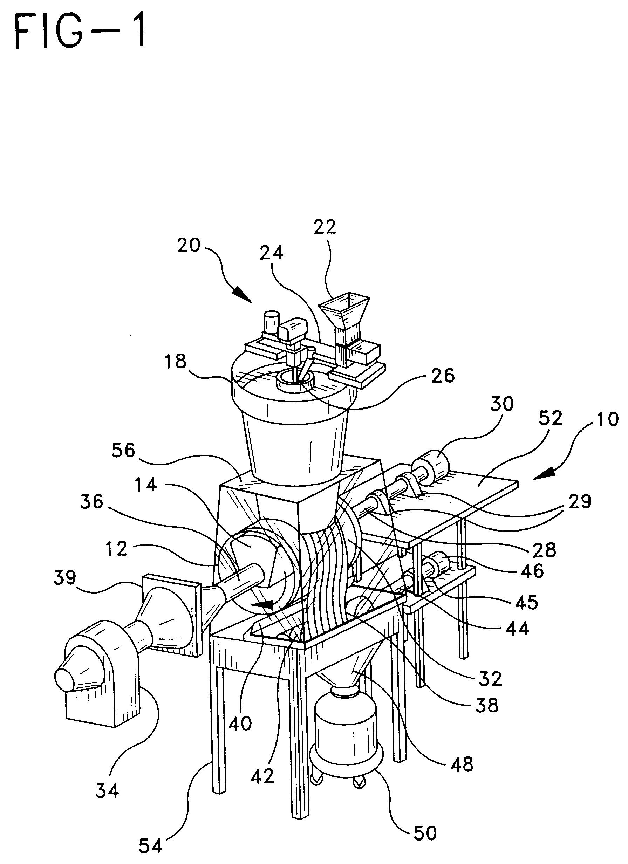

Referring to the drawings, Figure 1 shows a continuous floss production apparatus 10. The apparatus includes porous collection drum 12, suction plenum 14, and a floss spinner head mounted in a containment vessel 18. A feed mechanism 20 may be mounted atop the containment vessel 18, and may include feed hopper 22 and feedstock ducting 24 to transport feedstock into receiving passage 26 through which it flows into the spinner head.

The spinner head receives feedstock and discharges floss in a manner well known in the art. Of course, other sources of floss, in addition to spinner heads, may be used without departing from the scope of the invention. For example, a heated screw extruder with ejector can be used to produce floss by flash shear methods which have been invented by Bogue et al. See U.S. Patent No. 5,380,473 issued January 10, 1995.

The discharged floss falls through containment vessel 18 and contacts collection drum 12. The drum is mounted for rotation on, for example, shaft 28 which is in turn mounted on bearings 29, and the drum is driven, for example, by motor 30.

Floss on drum 12 is caused to adhere thereto by a suction applied via suction plenum 14. Air or other gaseous media is drawn into plenum 14 through the porous, continuous surface 32 cf drum 12 by, for example, exhaust blower 34 connected to plenum 14 by duct 36. The flow results in a suction applied to the plenum. Filter 38 may be employed to remove entrained particulate matter from the airstream entering the intake of blower 34.

The plenum 14 is located adjacent to the discharge of containment vessel 18 in the region where the floss product contacts drum 12. The localized application of suction serves to capture substantially all the floss product, yet allows easy separation of the product as the drum is rotated and the captured product 38 moves away from the suction region. Separation may be aided by well-known means of removing substrates from drums, such as doctor knife 40. The captured product 38, which is generally mat-like, may be discharged from the surface 32 of the drum 12 into chopper 42 for further processing. It has been observed that the combination of the porous surface 32 of drum 12 with the suction plenum 14 appears to act as a control gauge, yielding a fairly uniform layer of mat-like product which can easily be chopped into uniform segments.

A chopper can be disposed downstream of and adjacent to the drum and can be, for example, a hammer mill or a blade-type chopper with a cutter bar. The latter device is preferred for production of substantially uniform length fibers from the floss product. The length of the chopper is preferably coextensive with the transverse dimension of the drum. Chopper 42 may be driven by, for example, chopper shaft 44 mounted on bearing 45, and connected to chopper motor 46. Product discharged from chopper 42 can be funneled through outlet channel 48 into collection vessel 50.

Drum shaft 28 with bearings 29, chopper shaft 44 with bearing 45, drum motor 30, and chopper motor 46 can be mounted on drive table 52. Chopper 42 may be mounted on chopper table 54. Containment vessel 18 may be supported above drum 12, by, for example, shroud 56, which is in turn supported by chopper table 54. Shroud 56 is preferably constructed partially of a transparent material such as plexiglas to permit observation of the floss capture process within. Shroud 56 also prevents suction plenum 14 from entraining excessive amounts of extraneous foreign matter.

We have found that porous drum 12 is preferably constructed of stainless steel, although other metals and rigid materials such as plastic are also possible. Non-stick coatings such as polytetrafluoroethylene may be advantageously employed on the drum surface, and are an aid in cleaning. Continuous, porous surface 32 of drum 12 is preferably formed with a series of through holes having diameters ranging from 1/8 inch to 1 inch, although other types of porous passages are possible depending on the material being processed.

Preferably, the suction plenum is maintained at a vacuum of 5-20 inches Hg, although any appreciable amount of vacuum will aid in collection of the product. The applied vacuum may be limited by the flow parameters of, for example, the exhaust blower 34, plenum 14, duct 36, and porous surface 32 of drum 12. A low friction air seal may be optionally employed between the drum and the suction plenum to prevent air from being drawn directly into the plenum without passing through the holes in the surface 32.

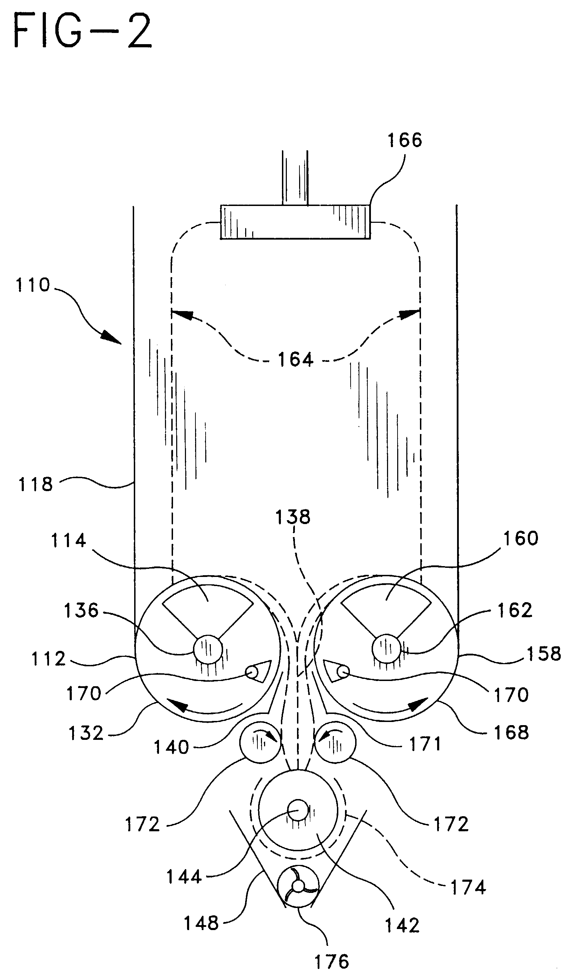

Figure 2 shows an alternative embodiment of the present invention, i.e., continuous floss production apparatus 110 having a second porous collection drum 158, with a second suction plenum 160 and second duct 162. The drums are positioned at the bottom end of containment vessel 118. Floss product 164 discharged from, for example, spinner head 166, contacts porous, continuous surfaces 132,168 of drums 112,158 respectively, and is caused to adhere thereto by suction applied to plenums 114,160 through ducts 136,162 as described above.

Second drum 158 rotates in a direction opposite to first drum 112 to urge floss product 164 between the drums from where mat-like captured product 138 is discharged, thereby enhancing takeup of product from the spinner head. Positive pressure nozzles 170 may preferably be employed to force air or other gaseous media through porous surfaces 132,168 to aid in separating product 138 from the porous surfaces, and to continuously clean the porous surfaces. Doctor knives 140,171 are advantageously provided to assist in separation.

Counter-rotating feed rollers 172 are preferably provided between the drums and chopper to assist in transporting the mat-like product 138 into chopper 142 which rotates on chopper shaft 144. Screen 174 surrounds chopper 142 to prevent expulsion of material therefrom until such time as the material has been sufficiently reduced in size to pass through preselected screen openings corresponding to desired floss fiber sizes. Cnce the material is sufficiently fine, it passes through screen 174 into outlet channel 148. A conveyor such as auger 176 is provided downstream of the outlet channel to transport processed material to, for example, a holding region.

In a method for the continuous production of floss products according to the invention, floss product is collected on an outer surface of a collection drum disposed opposite a floss production apparatus such as a spinner head or heated twin screw extruder with ejector. The floss product is then advanced for further processing, and is chopped into smaller pieces. Preferably, the collection step is conducted using two counter-rotating porous drums with applied suction, the advancing step is effected through the rotation of the drums, and a separation step followed by a feeding step is included after advancing and before chopping. The separation step can be accomplished by applying a positive pressure to the porous drums, while a pair of counter-rotating feed rollers can be used in the feeding step. A hammer mill or blade-type chopper with cutter bar are among the devices that can be employed in performing the chopping step.

While there have been described what are presently believed to be the preferred embodiments of the invention, those skilled in the art will realize that various changes and modifications may be made to the invention without departing from the spirit of the invention, and it is intended to claim all such changes and modifications as fall within the scope of the invention.

## Claims

1. An apparatus for the continuous production of floss products for use in conjunction with a floss-producing device, comprising:
a first porous collection drum mounted for rotation opposite an outlet of said floss-producing device, said drum having a continuous outer surface for collection of floss product emanating from said floss-producing device; and
a suction plenum disposed inside said collection drum, said plenum adjacent said surface so as to cause said floss product to adhere to said outer surface of said drum for takeup of said floss product from said floss-producing device.

2. The apparatus of Claim 1, further comprising a chopper disposed downstream of and adjacent to said drum to receive and chop said floss product upon separation of said floss product from said drum.

3. The apparatus of Claim 2, further comprising a feed roller located intermediate said drum and said chopper and optionally
a conveyor disposed downstream of and adjacent to said chopper to transport said floss product discharged from said chopper to a holding region.

4. The apparatus of Claim 2, wherein said chopper is a blade-type chopper with a cutter bar, said chopper and said cutter bar being dimensioned to produce substantially uniform length fibers from said floss product.

5. The apparatus of Claim 1, further comprising a positive pressure nozzle disposed inside said collection drum to aid in separation of said floss product from said drum.

6. The apparatus of Claim 1, further comprising at least a second porous collection drum mounted for rotation opposite said floss-producing device and said first porous collection drum, said second drum having a continuous outer surface for collection of said floss product emanating from said floss-producing device, said second collection drum rotating in a direction opposite said first drum to urge said floss product between said drums for enhanced takeup of said floss product from said floss-producing device.

7. The apparatus of Claim 6, further comprising:
a chopper disposed downstream of and adjacent to said first and second drums to receive and chop said floss product upon separation of said floss product from said drums; and
at least first and second feed rollers located intermediate said first and second drums and said chopper to feed said floss product into said chopper.

8. A method for the processing of floss products comprising the steps of:
collecting floss product on an outer surface of a collection drum disposed opposite a floss production apparatus; and
advancing said floss product from said drum for further processing of said floss product.

9. The method of Claim 8, wherein said collecting step comprises applying at least a partial vacuum to openings provided in said outer surface of said drum to cause said floss product to adhere thereto.

10. The method of Claim 8, further comprising separating said floss product from said drum after said advancing step and optionally
wherein said separating comprises applying a positive pressure to said outer surface of said drum to aid in separation.

11. The method of Claim 8, further comprising chopping said advanced floss product and optionally
separating said floss product from said drum after said advancing step; and
feeding said floss product after said separating step and prior to said chopping step.

12. A method for the processing of floss products comprising the steps of:
collecting floss product on outer surfaces of at least first and second collection drums disposed opposite a floss production apparatus; and
advancing said floss product from said drums for further processing of said floss product.

13. The method of Claim 12, wherein said collecting comprises applying a vacuum to openings in the surfaces of said drums whereby said floss product adheres thereto.

14. The method of Claim 12, comprising the additional steps of:
separating said floss product from said drums after said advancing step;
feeding said floss product after said step of separating said floss product; and
chopping said floss product.
